# EUROPÄISCHE PATENTANMELDUNG

(11) **EP 3 340 356 A1**
(43) Veröffentlichungstag der Anmeldung: **27.06.2018**
(21) Anmeldenummer: 17206923.9
(22) Anmeldetag: 13.12.2017
(51) Int. Cl.: H01M 8/1286, H01M 8/0217, H01M 8/0228

(54) **BRENNSTOFFZELLENVORRICHTUNG**

(30) Priorität: 20.12.2016 DE 102016225593
(71) Anmelder: Robert Bosch GmbH, 70442 Stuttgart (DE)
(72) Erfinder: Lupetin, Piero, 70567 Stuttgart (DE)

(57) **Zusammenfassung**

Die Erfindung geht aus von einer Brennstoffzellenvorrichtung mit einer Brennstoffzelleneinheit (10a; 10b), welche zumindest zwei Brennstoffzellen (12a, 14a; 12b; 14b) und eine Interkonnektoreinheit (16a; 16b), welche dazu vorgesehen ist, die zumindest zwei Brennstoffzellen (12a, 14a; 12b; 14b) seriell miteinander zu verschalten, umfasst.

Es wird vorgeschlagen, dass die zumindest eine Interkonnektoreinheit (16a; 16b) zumindest teilweise von einem Lanthan-Strontium-Titan-Manganoxid gebildet ist.

## Beschreibung

### Stand der Technik

Es ist bereits eine Brennstoffzellenvorrichtung mit einer Brennstoffzelleneinheit, welche eine Mehrzahl von Brennstoffzellen umfasst, vorgeschlagen worden. Die Brennstoffzellen sind mittels einer Interkonnektoreinheit seriell verschaltet.

### Offenbarung der Erfindung

Die Erfindung geht aus von einer Brennstoffzellenvorrichtung mit einer Brennstoffzelleneinheit, welche zumindest zwei Brennstoffzellen und eine Interkonnektoreinheit, welche dazu vorgesehen ist, die zumindest zwei Brennstoffzellen seriell miteinander zu verschalten, umfasst.

Es wird vorgeschlagen, dass die zumindest eine Interkonnektoreinheit zumindest teilweise von einem Lanthan-Strontium-Titan-Manganoxid gebildet ist.

Unter einer "Brennstoffzellenvorrichtung" soll in diesem Zusammenhang insbesondere eine Vorrichtung zu einer stationären und/oder mobilen Gewinnung insbesondere elektrischer und/oder thermischer Energie unter Verwendung zumindest einer Brennstoffzelleneinheit verstanden werden. Unter einer "Brennstoffzelleneinheit" soll in diesem Zusammenhang insbesondere eine Einheit mit einer Mehrzahl von miteinander verschalteten Brennstoffzellen verstanden werden, welche dazu vorgesehen ist, zumindest eine chemische Energie zumindest eines Brenngases, insbesondere Wasserstoff und/oder Kohlenstoffmonoxid, und zumindest eines Oxidationsmittels, insbesondere Sauerstoff, insbesondere in elektrische Energie umzuwandeln. Die Brennstoffzellen sind vorzugsweise als Festoxid-Brennstoffzelle (SOFC) ausgebildet.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Interkonnektoreinheit" soll in diesem Zusammenhang insbesondere eine Einheit verstanden werden, welche dazu vorgesehen ist, eine elektrisch leitende Verbindung zwischen den zumindest zwei Brennstoffzellen herzustellen, um die zumindest zwei Brennstoffzellen seriell miteinander zu verschalten.

Die Interkonnektoreinheit ist zumindest teilweise von einem manganbasierten Perowskit gebildet. Insbesondere kann die Interkonnektoreinheit zumindest im Wesentlichen vollständig von einem manganbasierten Perowskit gebildet sein. Vorzugsweise ist die Interkonnektoreinheit von einem Lanthan-Strontium-Titan-Manganoxid gebildet. Das Lanthan-Strontium-Titan-Manganoxid weist insbesondere die allgemeine chemische Formel (La₁₋ₓ Srₓ)_{y} (Ti_{z} Mn_{1-z})ₜ O₃ mit 0,05<x<0,3, 0,95<y<1, 0,05<z<0,20, 0,95<t<1 auf.

Durch eine derartige Ausgestaltung kann eine gattungsgemäße Brennstoffzellenvorrichtung mit verbesserten Betriebseigenschaften bereitgestellt werden. Insbesondere weist die Interkonnektoreinheit durch Verwendung eines Lanthan-Strontium-Titan-Manganoxids eine vorteilhafte thermische und/oder chemische Stabilität auf. Ferner weist die Interkonnektoreinheit durch Verwendung des Lanthan-Strontium-Titan-Manganoxids ein vorteilhaftes Sinterverhalten und/oder eine vorteilhafte elektrische Leitfähigkeit auf.

Ferner wird vorgeschlagen, dass die Brennstoffzelleneinheit zumindest eine Kathodenschicht, welche dazu vorgesehen ist, Kathoden der zumindest zwei Brennstoffzellen auszubilden, zumindest eine Anodenschicht, welche dazu vorgesehen ist, Anoden der zumindest zwei Brennstoffzellen auszubilden, und zumindest eine Elektrolytschicht, welche dazu vorgesehen ist, Elektrolyten der zumindest zwei Brennstoffzellen auszubilden, umfasst. Die zumindest eine Kathodenschicht kann insbesondere aus Lanthan-Strontium-Manganoxid und/oder Lanthan-Strontium-Eisenoxid-und/oder Lanthan-Strontium-Kobalt-Eisenoxid und/oder Lanthan-Nickel-Eisenoxid und/oder eine Mischung von Lanthan-Strontium-Kobalt-Eisenoxid und gadoliniumdotiertes Ceroxid gebildet sein. Vorzugsweise ist die Kathodenschicht aus Lanthan-Strontium-Manganoxid oder Lanthan-Strontium-Kobalt-Eisenoxid. Vorzugsweise weist das Material der zumindest einen Kathodenschicht eine Perowskit-Struktur auf. Die zumindest eine Anodenschicht kann insbesondere von einem Nickel und yttriumstabilisiertes Zirkoniumoxid umfassenden Cermet und/oder von einem Nickel und gadoliniumstabilisiertes Ceroxid umfassenden Cermet und/oder Lanthan-Strontium-Titanoxid gebildet sein. Die zumindest eine Elektrolytschicht kann insbesondere aus yttriumstabilisiertem Zirkoniumoxid und/oder scandiumstabilisiertem Zirkoniumoxid und/oder gadoliniumdotiertem Ceroxid gebildet sein. Die zumindest eine Elektrolytschicht ist insbesondere zwischen der zumindest einen Anodenschicht und der zumindest einen Kathodenschicht angeordnet. Die zumindest eine Kathodenschicht bildet jeweils eine Kathode der zumindest zwei Brennstoffzellen aus, wobei die Kathoden der zumindest zwei Brennstoffzellen vorzugsweise durch einen elektrischen und ionischen Isolator voneinander getrennt sind. Die zumindest eine Anodenschicht bildet jeweils eine Anode der zumindest zwei Brennstoffzellen aus, wobei die Anoden der zumindest zwei Brennstoffzellen vorzugsweise durch einen elektrischen und ionischen Isolator voneinander getrennt sind. Hierdurch kann ein vorteilhafter Aufbau der zumindest zwei Brennstoffzellen erreicht werden.

Ferner wird vorgeschlagen, dass die zumindest zwei Brennstoffzellen innerhalb der Brennstoffzelleneinheit derart angeordnet sind, dass eine Kathode einer ersten Brennstoffzelle eine Anode einer zweiten Brennstoffzelle zumindest teilweise überlappt. Hierdurch kann ein vorteilhaft kompakter Aufbau der Brennstoffzelleneinheit erreicht werden.

Des Weiteren wird vorgeschlagen, dass die Interkonnektoreinheit innerhalb der Elektrolytschicht der Brennstoffzelleneinheit angeordnet ist. Insbesondere ist die Interkonnektoreinheit dazu vorgesehen, eine Kathode einer ersten Brennstoffzelle mit einer Anode einer zweiten Brennstoffzelle in Reihe zu schalten. Die Interkonnektoreinheit ist insbesondere derart innerhalb der Elektrolytschicht der Brennstoffzelleneinheit angeordnet, dass sie ein Elektrolyt einer ersten Brennstoffzelle insbesondere ionisch isolierend von einem Elektrolyt einer zweiten Brennstoffzelle trennt. Insbesondere ist die Interkonnektoreinheit in einem Bereich der Elektrolytschicht angeordnet, in welchem sich eine Kathode einer ersten Brennstoffzelle und eine Anode einer zweiten Brennstoffzelle zumindest teilweise überlappen. Hierdurch kann eine Brennstoffzelleneinheit mit vorteilhaft großen elektrochemisch aktiven Flächen realisiert werden.

Ferner wird vorgeschlagen, dass die Interkonnektoreinheit zumindest zwei Lagen aufweist, wobei zumindest eine erste Lage zumindest im Wesentlichen von einem Lanthan-Strontium-Titan-Manganoxid gebildet ist. Die zumindest eine Interkonnektoreinheit ist insbesondere aus voneinander verschiedenen Materialien gebildet, welche schichtweise aneinander angeordnet sind. Die Materialien, aus denen die Interkonnektoreinheit gebildet ist, weisen insbesondere komplementäre und/oder ergänzende funktionelle Eigenschaften, insbesondere hinsichtlich einer Leitfähigkeit und/oder eines Sinterverhaltens, auf. Vorzugsweise weisen die Materialien der Interkonnektoreinheit jeweils eine Perowskit-Struktur auf. Hierdurch können Materialeigenschaften verschiedener Materialien vorteilhaft kombiniert werden. Hierdurch kann die Interkonnektoreinheit vorteilhaft an Anforderungen einer Brennstoffzellenvorrichtung angepasst werden, wodurch insbesondere eine Funktionalität und/oder Lebensdauer der Brennstoffzellenvorrichtung vorteilhaft gesteigert werden kann.

Vorzugsweise weist die Interkonnektoreinheit zumindest eine zweite Lage auf, welche von einem nickelbasierten Perowskit gebildet ist. Das nickelbasierte Perowskit weist insbesondere die allgemeine chemische Formel La Niₓ Fe₁₋ₓ O₃ mit 0,05<x<0,6 auf. Hierdurch kann eine vorteilhaft gasdichte zweite Lage geschaffen werden, wodurch eine Gasdichtheit der Brennstoffzellenvorrichtung vorteilhaft erhöht werden kann. Ferner kann eine vorteilhaft hohe Leitfähigkeit der zumindest einen zweiten Lage unter einer kathodischen Atmosphäre erreicht werden. Durch die Kombination der zumindest einen ersten Lage und der zumindest einen zweiten Lage zu einer Interkonnektoreinheit können somit ohmsche Verluste vorteilhaft reduziert werden, da sowohl in einer anodischen als auch in einer kathodischen Atmosphäre eine vorteilhaft hohe Leitfähigkeit erreicht werden kann.

Zudem wird vorgeschlagen, dass die zumindest eine erste Lage der Interkonnektoreinheit in Richtung der zumindest einen Anodenschicht und die zumindest eine zweite Lage der Interkonnektoreinheit in Richtung der zumindest einen Kathodenschicht weist. Hierdurch kann eine vorteilhafte Anordnung der Lagen der Interkonnektoreinheit, insbesondere im Hinblick auf eine Orientierung der Materialien der Interkonnektoreinheit, innerhalb der Brennstoffzelleneinheit erreicht werden.

Ferner wird vorgeschlagen, dass die Brennstoffzellenvorrichtung zumindest einen Trägerkörper umfasst, auf welchem die Brennstoffzelleneinheit angeordnet ist. Unter einem "Trägerkörper" soll in diesem Zusammenhang insbesondere ein Element verstanden werden, welches dazu vorgesehen ist, die zumindest eine Brennstoffzelleneinheit insbesondere mechanisch zu entlasten und/oder zu stabilisieren. Dies ermöglicht insbesondere eine vorteilhaft dünne Ausgestaltung der Brennstoffzelleneinheit. Insbesondere kann durch eine Verringerung einer Dicke der zumindest einen Elektrolytschicht eine Leitfähigkeit der Elektrolyten der zumindest zwei Brennstoffzellen vorteilhaft verbessert und somit eine Effizienz der Brennstoffzellen vorteilhaft gesteigert werden. Der Trägerkörper kann insbesondere rohrförmig ausgestaltet sein. Beispielsweise kann der Trägerkörper an zumindest einem offenen Rohrende einen, insbesondere gasdichten, Befestigungsabschnitt zu einer Befestigung des Trägerkörpers an einem Trägersubstrat aufweisen. An einem anderen Rohrende kann der Trägerkörper einen weiteren derartigen Befestigungsabschnitt aufweisen oder insbesondere durch einen, insbesondere gasdichten, Kappenabschnitt verschlossen sein. Alternativ kann der Trägerkörper insbesondere planar ausgestaltet sein. Die Brennstoffzelleneinheit ist insbesondere derart an dem Trägerkörper angeordnet, dass vorzugsweise die zumindest eine Kathodenschicht an den Trägerkörper angrenzt. In Bereichen in denen die Brennstoffzelleneinheit an den Trägerkörper angrenzt, ist der Trägerkörper vorzugsweise gasdurchlässig ausgebildet und weist beispielsweise gasdurchlässige Poren und/oder Öffnungen auf. Der Trägerkörper kann insbesondere aus einem oder mehreren keramischen und/oder glasartigen Materialien ausgebildet sein. Beispielsweise kann der Trägerkörper aus Forsterit und/oder Zirkoniumdioxid und/oder Aluminiumoxid ausgebildet sein. Hierdurch kann eine vorteilhafte mechanische und/oder thermische Stabilität der Brennstoffzellenvorrichtung erreicht werden.

Zudem wird ein Verfahren zur Herstellung einer erfindungsgemäßen Brennstoffzellenvorrichtung vorgeschlagen. Insbesondere wird in einem Verfahrensschritt, bevorzugt mittels eines Sol-Gel-Prozesses oder eines Sprühpyrolyse - Prozesses, ein Lanthan-Strontium-Titan-Manganoxid-Pulver hergestellt. Insbesondere wird das Lanthan-Strontium-Titan-Manganoxid-Pulver in einem weiteren Verfahrensschritt zu einer siebdruckfähigen Paste verarbeitet. Insbesondere kann in zumindest einem Verfahrensschritt zumindest die Interkonnektoreinheit und vorzugsweise die gesamte Brennstoffzelleneinheit mittels Siebdrucks hergestellt werden. Insbesondere können in zumindest einem weiteren Verfahrensschritt die Materialien der Interkonnektoreinheit und/oder der Brennstoffzelleneinheit und/oder des Trägerkörpers cogesintert werden. Hierdurch kann eine vorteilhaft einfache und/oder kostengünstige Herstellung der erfindungsgemäßen Brennstoffzellenvorrichtung erreicht werden.

Die erfindungsgemäße Brennstoffzellenvorrichtung soll hierbei nicht auf die oben beschriebene Anwendung und Ausführungsform beschränkt sein. Insbesondere kann die erfindungsgemäße Brennstoffzellenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:
- Fig. 1: einen schematischen Querschnitt durch eine Brennstoffzellenvorrichtung mit einer Brennstoffzelleneinheit, welche zumindest zwei Brennstoffzellen umfasst, welche mittels einer Interkonnektoreinheit seriell miteinander verschalten sind, und
- Fig. 2: einen schematischen Querschnitt durch eine Brennstoffzellenvorrichtung mit einer Brennstoffzelleneinheit, welche zumindest zwei Brennstoffzellen umfasst, welche mittels einer zweilagig ausgebildeten Interkonnektoreinheit seriell miteinander verschalten sind.

### Beschreibung der Ausführungsbeispiele

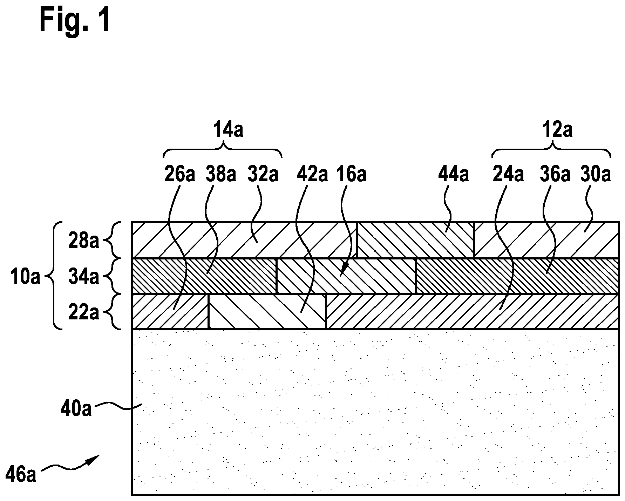

Figur 1 zeigt einen schematischen Querschnitt durch eine hier lediglich teilweise dargestellte Brennstoffzellenvorrichtung 46a. Die Brennstoffzellenvorrichtung 46a umfasst eine Brennstoffzelleneinheit 10a, welche hier beispielhaft zwei in Reihe geschaltete Brennstoffzellen 12a, 14a umfasst. Die Brennstoffzellen 12a, 14a sind über eine Interkonnektoreinheit 16a in Reihe geschaltet. Die Interkonnektoreinheit 16a ist vollständig von einem Lanthan-Strontium-Titan-Manganoxid gebildet. Das Lanthan-Strontium-Titan-Manganoxid weist die allgemeine chemische Formel (La₁₋ₓSrₓ)_{y}(Ti_{z} Mn_{1-z})ₜ O₃ mit 0,05<x<0,3, 0,95<y<1, 0,05<z<0,20, 0,95<t<1 auf.

Die Brennstoffzelleneinheit 10a ist in Form eines mehrlagigen Schichtsystems ausgebildet, wobei die Brennstoffzellen 12a, 14a im Wesentlichen nebeneinander ausgebildet sind. Die Brennstoffzelleneinheit 10a umfasst dabei eine Kathodenschicht 22a, eine Elektrolytschicht 34a und eine Anodenschicht 28a. Die Kathodenschicht 22a bildet mehrere Kathoden 24a, 26a der Brennstoffzellen 12,14 aus. Die Anodenschicht 28a bildet mehrere Anoden 30a, 32a der Brennstoffzellen 12a, 14a aus. Die Elektrolytschicht 34a bildet mehrere Elektrolyten 36a, 38a der Brennstoffzellen 12a, 14a aus.

Die Interkonnektoreinheit 16a ist vollständig innerhalb der Elektrolytschicht 34a angeordnet. Insbesondere ist die Interkonnektoreinheit 16a derart angeordnet, dass über die Interkonnektoreinheit 16a die Kathode 24a der ersten Brennstoffzelle 12a mit der Anode 32a der zweiten Brennstoffzelle 14a in Reihe geschaltet ist. Dabei ist das Elektrolyt 36a der ersten Brennstoffzelle 12a durch die Interkonnektoreinheit 16a, insbesondere ionisch isolierend, von dem Elektrolyt 38a der zweiten Brennstoffzelle 14a getrennt.

Die Kathoden 24a, 26a der Brennstoffzellen 12, 14 sind durch einen elektrisch und ionisch isolierenden Bereich 42a und die Anoden 30a ,32a der Brennstoffzellen 12a, 14a sind durch mindestens einen elektrisch und ionisch isolierenden Bereich 44a voneinander getrennt. In der in Figur 1 gezeigten Ausführungsform sind zudem die Kathoden 24a, 26a und die Anoden 30a, 32a der Brennstoffzellen 12a, 14a derart durch die Kathodenschicht 22a beziehungsweise die Anodenschicht 28a ausgebildet, dass die Kathode 24a der ersten Brennstoffzelle 12a die Anode 32 ader zweiten Brennstoffzelle 14a teilweise überlappt. In dem überlappenden Bereich ist dabei die Interkonnektoreinheit 16a in der Elektrolytschicht 34a angeordnet. Alternativ kann jedoch auf eine Überlappung einer Kathode und einer Anode verzichtet werden.

Die Brennstoffzellenvorrichtung 46a weist ferner einen Trägerkörper 40a auf. Der Trägerkörper 40a kann zum Beispiel aus einem oder mehreren keramischen und/oder glasartigen Materialien ausgebildet sein. Grundsätzlich kann es sich bei dem Trägerkörper 40a sowohl um einen rohrförmigen beziehungsweise tubular ausgebildeten Trägerkörper als auch um einen planar ausgebildeten Trägerkörper handeln. Die Brennstoffzellenvorrichtung 46a kann daher sowohl als eine planare Brennstoffzellenvorrichtung als auch vorzugsweise als eine tubulare Brennstoffzellenvorrichtung ausgebildet sein. Die Brennstoffzelleneinheit 10a kann insbesondere auf einer Innenseite oder auf einer Außenseite, vorzugsweise jedoch, wie hier dargestellt, auf der Innenseite, des Trägerkörpers 40a aufgebracht sein. Figur 1 veranschaulicht, dass die Kathoden 24a, 26a der Brennstoffzellen 12a, 14a beziehungsweise die Kathodenschicht 22a der Brennstoffzelleneinheit 10a an den Trägerkörper 40a angrenzen. Die Anoden 30a ,32a der Brennstoffzellen 12a, 14a beziehungsweise die Anodenschicht 28a der Brennstoffzelleneinheit 10a liegt offen beziehungsweise ist frei zugänglich. Der Trägerkörper 40a weist in dem an die Brennstoffzellen 12a, 14a angrenzenden Abschnitt gasdurchlässige Poren und/oder Öffnungen auf.

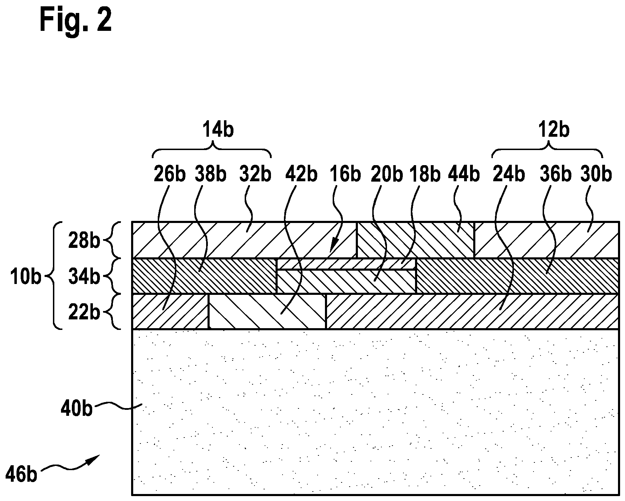

In Figur 2 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des anderen Ausführungsbeispiels, insbesondere der Figur 1, verwiesen werden kann. Zur Unterscheidung der Ausführungsbeispiele ist der Buchstabe a den Bezugszeichen des Ausführungsbeispiels in Figur 1 nachgestellt. In dem Ausführungsbeispiel der Figur 2 ist der Buchstabe a durch den Buchstaben b ersetzt.

Figur 2 zeigt einen schematischen Querschnitt durch eine hier lediglich teilweise dargestellte alternative Brennstoffzellenvorrichtung 46b. Die Brennstoffzellenvorrichtung 46b umfasst eine Brennstoffzelleneinheit 10b, welche hier beispielhaft zwei in Reihe geschaltete Brennstoffzellen 12b, 14b umfasst. Die Brennstoffzellen 12b, 14b sind über eine Interkonnektoreinheit 16b in Reihe geschaltet.

Die Interkonnektoreinheit 16b ist zweilagig ausgebildet. Eine erste Lage 18b der Interkonnektoreinheit 16b ist von einem Lanthan-Strontium-Titan-Manganoxid gebildet. Das Lanthan-Strontium-Titan-Manganoxid weist die allgemeine chemische Formel (La₁₋ₓ Sr)_{y} (Ti_{z} Mn_{1-z})ₜ O₃ mit 0,05<x<0,3, 0,95<y<1, 0,05<z<0,20, 0,95<t<1 auf. Eine zweite Lage 20b der Interkonnektoreinheit 16b ist zumindest im Wesentlichen von einem nickelbasierten Perowskit gebildet. Das nickelbasierte Perowskit weist die allgemeine chemische Formel La Niₓ Fe₁₋ₓ O₃ mit 0,05<x<0,6 auf. Die Lagen 18b, 20b der Interkonnektoreinheit 16b sind derart angeordnet, dass die erste Lage 18b der Interkonnektoreinheit 16b in Richtung einer Anodenschicht 28b und die zweite Lage 20b der Interkonnektoreinheit 16 in Richtung einer Kathodenschicht 22b weist. Durch den zweilagigen Aufbau der Interkonnektoreinheit 16b sind die positiven Materialeigenschaften des Lanthan-Strontium-Titan-Manganoxids der ersten Lage 18b und des nickelbasierten Perowskit der zweiten Lage 20b vorteilhaft miteinander kombiniert.

## Patentansprüche

1. Brennstoffzellenvorrichtung mit einer Brennstoffzelleneinheit (10a; 10b), welche zumindest zwei Brennstoffzellen (12a, 14a; 12b; 14b) und eine Interkonnektoreinheit (16a; 16b), welche dazu vorgesehen ist, die zumindest zwei Brennstoffzellen (12a, 14a; 12b; 14b) seriell miteinander zu verschalten, umfasst, **dadurch gekennzeichnet, dass** die zumindest eine Interkonnektoreinheit (16a; 16b) zumindest teilweise von einem Lanthan-Strontium-Titan-Manganoxid gebildet ist.

2. Brennstoffzellenvorrichtung nach Anspruch 1, **dadurch gekennzeichnet, dass** die Brennstoffzelleneinheit (10a; 10b) zumindest eine Kathodenschicht (22a; 22b), welche dazu vorgesehen ist, Kathoden (24a, 26a; 24b, 26b) der zumindest zwei Brennstoffzellen (12a, 14a; 12b; 14b) auszubilden, zumindest eine Anodenschicht (28a; 28b), welche dazu vorgesehen ist, Anoden (30a, 32a; 30b, 32b) der zumindest zwei Brennstoffzellen (12a, 14a; 12b; 14b) auszubilden, und zumindest eine Elektrolytschicht (34a; 34b), welche dazu vorgesehen ist, Elektrolyten (36a, 38a; 36b, 38b) der zumindest zwei Brennstoffzellen (12a, 14a; 12b; 14b) auszubilden, umfasst.

3. Brennstoffzellenvorrichtung nach Anspruch 2, **dadurch gekennzeichnet, dass** die zumindest zwei Brennstoffzellen (12a, 14a; 12b; 14b) innerhalb der Brennstoffzelleneinheit (10a; 10b) derart angeordnet sind, dass eine Kathode (24a; 24b) einer ersten Brennstoffzelle (12a; 12b) eine Anode (32a; 32b) einer zweiten Brennstoffzelle (14a; 14b) zumindest teilweise überlappt.

4. Brennstoffzellenvorrichtung zumindest nach Anspruch 2 oder 3, **dadurch gekennzeichnet, dass** die Interkonnektoreinheit (16a; 16b) innerhalb der Elektrolytschicht (34a; 34b) der Brennstoffzelleneinheit (10a; 10b) angeordnet ist.

5. Brennstoffzellenvorrichtung nach einem der vorhergehenden Ansprüche, **dadurch gekennzeichnet, dass** die Interkonnektoreinheit (16b) zumindest zwei Lagen (18b, 20b) aufweist, wobei zumindest eine erste Lage (18b) zumindest im Wesentlichen von einem Lanthan-Strontium-Titan-Manganoxid gebildet ist.

6. Brennstoffzellenvorrichtung nach Anspruch 5, **dadurch gekennzeichnet, dass** die Interkonnektoreinheit (16b) zumindest eine zweite Lage (20b) aufweist, welche von einem nickelbasierten Perowskit gebildet ist.

7. Brennstoffzellenvorrichtung nach Anspruch 5 oder 6, **dadurch gekennzeichnet, dass** die zumindest eine erste Lage (18b) der Interkonnektoreinheit (16b) in Richtung der zumindest einen Anodenschicht (28b) und die zumindest eine zweite Lage (20b) der Interkonnektoreinheit (16b) in Richtung der zumindest einen Kathodenschicht (22b) weist.

8. Brennstoffzellenvorrichtung nach einem der vorhergehenden Ansprüche, **gekennzeichnet durch** zumindest einen Trägerkörper (40a; 40b), auf welchem die Brennstoffzelleneinheit (10a; 10b) angeordnet ist.

9. Verfahren zur Herstellung einer Brennstoffzellenvorrichtung (46a; 46b) nach einem der Ansprüche 1 bis 8.
